# EUROPEAN PATENT SPECIFICATION

(11) **EP 0 652 934 B1**
(45) Date of publication and mention of the grant of the patent: **02.10.1996**
(21) Application number: 93915898.6
(22) Date of filing: 12.07.1993
(51) Int. Cl.: C11D 3/12, C01B 33/36

(54) **USE OF ALUMINOSILICATES OF THE ZEOLITE P TYPE AS LOW TEMPERATURE CALCIUM BINDERS**
VERWENDUNG VON ALUMINIUMSILICATEN VOM TYP ZEOLITH P ALS CALCIUMBINDER BEI NIEDRIGER TEMPERATUR
UTILISATION D'ALUMINOSILICATES DU TYPE ZEOLITHE P COMME LIANTS CALCIQUES A BASSE TEMPERATURE

(30) Priority: 31.07.1992 GB 9216386
(43) Date of publication of application: 17.05.1995
(73) Proprietor: CROSFIELD LIMITED, Warrington, Cheshire, WA5 1AB (GB)
(72) Inventor: ADAMS, Christopher, John Highfield, Wirral Merseyside L43 5SD (GB); ARAYA, Abraham 53 Friars Close, Wirral Merseyside L63 3HY (GB); GRAHAM, Peter 9 Melton Close, Wirral Merseyside L49 6PJ (GB); HIGHT, Andrew, Timothy, Raby Mere Wirral Merseyside L63 0NA (GB)
(74) Representative: Hugot, Alain
(86) International application number: PCT/EP93/01836
(87) International publication number: WO 94/03573

(56) References cited:
- EP-A- 0 038 591
- EP-A- 0 384 070
- DE-A- 2 620 293

## Description

### FIELD OF THE INVENTION

The present invention relates to the use of aluminosilicates of the zeolite P type as low temperature calcium binders. These materials are specifically useful in detergents formulations in which they remove calcium and magnesium ions by ion exchange and which are to be used at ambient temperature. These aluminosilicates will be referred to as zeolites P in this description.

### BACKGROUND OF THE INVENTION

The zeolite P class includes a series of synthetic zeolite phases which may be in cubic configuration (also termed B or Pc) or tetragonal configuration (also termed P1) but is not limited to these forms. The structure and characteristics of the zeolite P class are given in "zeolite Molecular Sieves" of Donald W Breck (published 1974 and 1984 by Robert E Krieger of Florida U.S.A.). The zeolite P class has the typical oxide formula:

M_{2/n}O. Al₂O₃. 1.80 - 5.00 SiO₂. 5H₂O

M is an n-valent cation which for this invention is an alkali metal, that is lithium, potassium, sodium, caesium or rubidium with sodium and potassium being preferred and sodium being the cation normally used in commercial processes.

Thus sodium may be present as the major cation with another alkali metal present in a minor proportion to provide specific benefit.

In the present invention crystalline P-zeolites having a Si:Al ratio from 0.9 to 1.33 are used.

The utility of zeolites P in detergents formulations has been acknowledged. For example, European Patent Application 0384070 (Unilever) discloses the use of a specific zeolite P as detergency builders.

In EP0384070, comparisons of calcium binding capacity and calcium uptake rate are made between the specific zeolite P which is disclosed in that document and zeolite 4A. The use of zeolite P as calcium binder at temperatures of 22+2°C is disclosed.

It has now been found that certain zeolites P prove to have, at a temperature as low as 5°C, a very high calcium binding capacity as well as a very good rate of calcium ion uptake. Therefore, those materials are very useful as calcium binders when used at low temperature, i.e. below 25°C. Specifically, those materials are useful in detergents compositions which are used at ambient temperature.

### GENERAL DESCRIPTION OF THE INVENTION

A first object of the present invention is a process for washing fabrics at a temperature below 25°C, for at least a part of a washing cycle, with a detergent composition comprising a surfactant system, a detergency builder system and optionally other conventional components, the detergency builder system comprising a zeolite P type having the oxide formula M_{2/n}O.Al₂O₃.(1.80-2.66)SiO₂.yH₂O, y being the water content. Usually the detergent composition contains 20% to 80% by weight of the detergency builder system and may contains 5% to 80% by weight of the alkali metal aluminosilicate.

A second object of the present invention is to provide a process for removing calcium ions, by ion exchange, from an aqueous solution at a temperature of between 5°C and 10°C wherein an effective amount of an alkali metal aluminosilicate of the zeolite P type having the oxide formula M_{2/n}O.Al₂O₃. (1.80-2.66)SiO₂.yH₂O, y being the water content, is used as ion exchanger.

### STANDARD PROCEDURES

In the characterisation of the zeolite P materials used in the present invention, the following methods were used.
i . Particle size: The average particle size (micrometers) was measured by a Malvern Mastersizer (Trade Mark) obtainable from Malvern Instruments, England and expressed as the d₅₀ , i.e. 50% by weight of the particles have a diameter smaller than the diameter quoted. The definitions d₈₀ and d₉₀ may also be used in association with the appropriate figure.
ii. Calcium uptake rate (CUR) : The rate of removal of Ca ions from a wash liquor is an important characteristic of a detergency builder. The time, in seconds, is taken from a zeolite, at a concentration of 1.85 g dm⁻³ and at various temperatures, to reduce the calcium ion concentration in a 0.01M sodium chloride solution from an initial value of 2 x 10⁻³ M to 10⁻⁵ M. The zeolite was first equilibrated to constant weight over saturated sodium chloride solution and the water content measured.
   The titrator used was a Radiometer Titralab (Trade Mark).
   This method provides a realistic indicator of Calcium Uptake Rate in wash liquor environment.
iii. Calcium effective binding capacity (CEBC): The CEBC was measured in the presence of a background electrolyte to provide a realistic indicator of calcium ion uptake in a wash liquor environment. A sample of each zeolite was first equilibrated to constant weight over saturated sodium chloride solution and the water content measured. Each equilibrated sample was dispersed in water (1 cm³), in an amount corresponding to 1 g of anhydrous zeolite per dm³, and the resulting dispersion (1 cm³) was injected into a stirred solution, consisting of 0.01M NaCl solution (50 cm³) and 0.05M CaCl₂ (3.923 cm³), therefore producing a solution of total volume 54.923 cm³. This corresponded to a concentration of 200 mg CaO per litre, i.e. just greater than the theoretical maximum amount (197 mg) that can be taken up by a zeolite of Si:Al ratio 1.00. The change in Ca²⁺ ion concentration was measured by using a Ca²⁺ ion selective electrode, the final reading being taken after 15 minutes. The temperature was maintained at a specific temperature throughout. The Ca²⁺ ion concentration measured was subtracted from the initial concentration, to give the effective calcium binding capacity of the zeolite sample as mg CaO/g zeolite.

### PREPARATION OF THE ALKALI METAL ALUMINOSILICATE

Zeolite P can be prepared by reacting a silica source and an alkali metal aluminate, generally a sodium aluminate.

In order to prepare a zeolite P having the oxide formula M_{2/n}O.Al₂O₃.(1.80-2.66)SiO₂ .yH₂O, wherein y is the water content, a sodium aluminate solution at a temperature of at least 25°C is mixed with a sodium silicate solution at a temperature of at least 25°C in a stirred vessel in the presence of a slurry of P zeolite seed to form a gel having the composition,

Al₂O₃:(1.00-3.5)SiO₂:(1.2-7.5)Na₂O:(25 to 450) H₂O.

The gel is then aged at a temperature above about 25°C with adequate stirring to maintain solids in suspension for period of at least 0.1 hours. The zeolite P product is then washed and dried. The source of zeolite P is not critical, although preferably it is added to the reactants as a previously prepared slurry. Alternatively, a crystallised slurry from a previous reaction may be used. Additionally, the Si:Al ratio of the zeolite P seed is not critical and a ratio above 1.33 can be used.

### DETERGENTS COMPOSITIONS

The zeolite P may be incorporated in detergent compositions of all physical types, for example, powders, liquids, gels and solid bars, at the level normally used for detergency builders. The formulation principles already established for the use of zeolite 4A in detergent compositions may generally be followed. A specific class of detergent composition to which the invention is especially applicable are products which are used, at least for a part of a washing cycle, at low temperature, i.e. between 5°C and 25°C.

### SPECIFIC DESCRIPTION OF THE INVENTION

In order that the present invention may be further understood it will be described hereafter by means of examples and with reference to the following Figures where:
- Fig.1 represents the difference in Calcium Uptake Rate between a zeolite 4A and a zeolite P according to the present invention, at different temperatures,
- Fig.2 represents the difference in Calcium Effective Binding Capacity between a zeolite 4A and a zeolite P according to the present invention, at different temperatures.

### Zeolite P preparation:

### Zeolite P seed preparation:

A sample of zeolite P was produced using the following procedure.

1420 g of 2M sodium hydroxide solution and 445 g of commercial sodium aluminate solution (concentration 20% Na₂O, 20% Al₂O₃) (Na₂O/Al₂O₃ = 1.64) were placed in a 5 litre baffled flask connected to a reflux condenser. The resultant solution was stirred and heated to 90°C. 450g of commercial sodium silicate solution ((SiO₂ 28.3%/13.8% Na₂O) w/w) SiO₂/Na₂O = 2:1) was diluted with 1100g of deionised water. The diluted silicate solution was heated to 75°C and added to the stirred caustic aluminate solution over 18 minutes. The resultant reaction mixture gel was allowed to react at 90°C with stirring for 5 hours. The product was filtered, washed and dried.

### Zeolite P preparation:

Solutions A, B and C were prepared.
- Solution A: - 648g of 2M sodium hydroxide solution
- Solution B: - 952g of commercial sodium silicate solution as used in the seed reaction
- 470g of 2M sodium hydroxide solution
- 20g of zeolite P seed slurried in 30g deionised water.
- Solution C: - 1139.5g of commercial sodium aluminate (20% Na₂O, 20% Al₂O₃)
- 805g of 2M NaOH solution.

Solution A was placed in a 5 litre round bottomed baffled flask with pitch blade turbine (500rpm) having a reflux condenser and heated to 90°C with vigorous stirring.

Solution B and solution C were first preheated to 80°C and added, beginning simultaneously, to solution A over 20 minutes and 40 minutes respectively. The reaction gel was allowed to react at 90°C with stirring for 5 hours. The product was filtered, washed and dried.

It was obtained a zeolite P having a SiO₂/Al₂O₃ ratio of 2.00. The average particle size (d₅₀) was 0.90 µm.

### Effect of temperature on the calcium uptake rate

The Calcium Uptake Rate (CUR) of a zeolite P, produced as above-described, was compared with the CUR of a zeolite 4A commercially available under the Trade Mark WESSALITH P. This zeolite 4A had an average particle size (d₅₀) of 4.3µm.

Thus, the time, in seconds, taken for each material, at a concentration of 1.85 g dm⁻³, to reduce the Ca²⁺ concentration in an 0.01M sodium chloride solution from an initial value of 2 x 10⁻³M to 10⁻⁵M, was measured at different temperatures.

The results are summarised in the following table.

| Temperature (°C) | Time (seconds ) to reach 10⁻⁵M Ca²⁺ | |
|---|---|---|
| | Zeolite 4A | Zeolite P |
| 5 | 385 | 55 |
| 10 | 155 | 22 |
| 25 | 35 | 4 |
| 40 | 18 | 2 |

It is immediately apparent that, for temperatures below 25°C, the CUR of the zeolite P used in the present invention is always significantly faster than the CUR of zeolite 4A. Even more important is the fact that, using a zeolite P, a concentration of 10⁻⁵M is obtained in less than 60 seconds at 5°C.

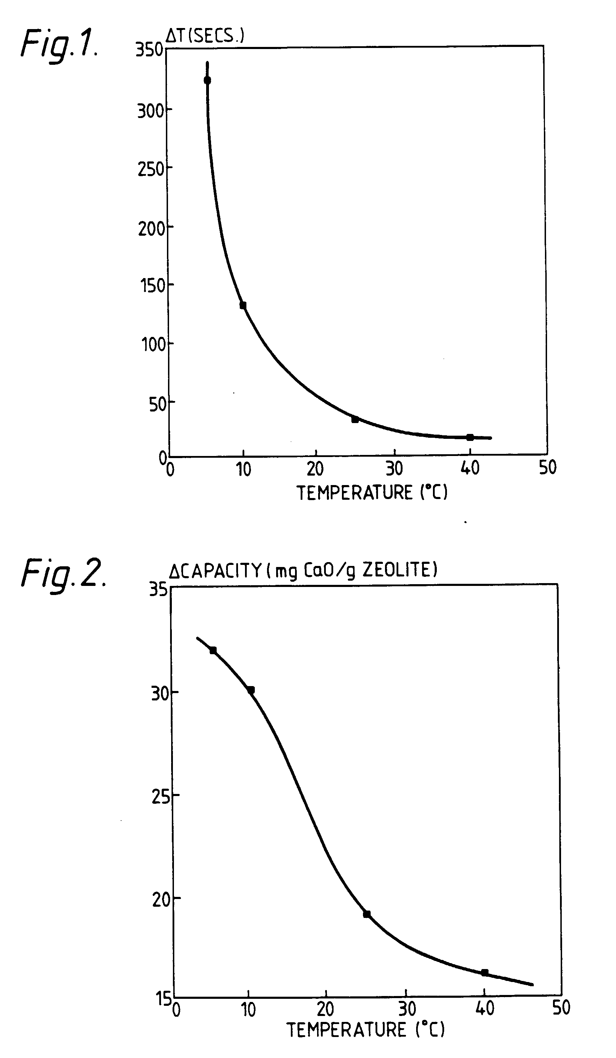

Fig. 1 clearly shows that the difference in term of CUR is particularly important below 25°C.

### Effect of temperature on calcium binding capacity

Using the same zeolite 4A and the same zeolite P, the Calcium Effective Binding Capacity was assessed according to the above-described method.

The results are summarised in the following table.

| Temperatur (°C) | Calcium Effective Binding Capacity (mg CaO/ g zeolite) | |
|---|---|---|
| | Zeolite 4A | Zeolite P |
| 5 | 116 | 148 |
| 10 | 132 | 162 |
| 25 | 147 | 166 |
| 40 | 158 | 177 |

Thus, it is apparent that the CEBC of zeolite P is much less sensitive to temperature that the CEBC of zeolite 4A. Fig. 2 clearly shows that the difference in term of CEBC is particularly important below 25°C.

### Effect of temperature on detergency

In this experiment, the detergencies of two wash liquors containing respectively zeolite P, produced as above described, and zeolite 4A (Wessalith P), as above described, were compared at two different temperatures and wash times.

The wash liquors composition were as follows (in g/l):

| | Zeolite P | Zeolite 4A |
|---|---|---|
| Linear C₁₁₋₁₃ alkylbenzene sulphonate | 0.19 | 0.19 |
| Nonionic surfactant (7EO) | 0.14 | 0.14 |
| Tallow soap | 0.08 | 0.08 |
| Zeolite 4A (hydrated basis) | - | 1.64 |
| Zeolite P (hydrated basis) | 1.58 | - |
| Acrylic/maleic copolymer | 0.14 | 0.14 |
| Sodium silicate | 0.02 | 0.02 |
| Sodium carboxymethylcellulose | 0.03 | 0.03 |
| Sodium carbonate | 0.39 | 0.39 |
| Sodium metaborate | 0.88 | 0.88 |
| Fluorescer | 0.01 | 0.01 |

Builder-sensitive test cloths were washed in tergotometers at a liquor to cloth ratio of 20:1 and an agitation speed of 100 rpm. Detergency was assessed by measuring reflectance at 460 nm before and after the wash: the higher the difference, the better the cleaning.

In a first experiment (test 1), cotton cloth soiled with oil silica and ink was washed at 20°C and 40°C. In a second experiment (test 2), cotton cloth soiled with casein was also washed at 20°C and 40°C. The results are summarised in the following table.

| Test | 1 | 1 | 2 | 2 |
|---|---|---|---|---|
| Temperature (°C) | 20 | 40 | 20 | 40 Wash |
| time (minutes) | 10 | 30 | 10 | 30 |

| Reflectance increase | | | | |
|---|---|---|---|---|
| Zeolite P | 17.4 | 23.9 | 13.2 | 18.7 |
| Zeolite 4A | 10.7 | 22.7 | 10.1 | 17.4 |

The results show the expected superiority of the zeolite P under the near-equilibrium conditions of the 40°C 30-minute wash and demonstrate the greater superiority of the zeolite P under the more forcing conditions of the 20°C 10-minute wash.

## Claims

1. Process for washing fabrics with a detergent composition comprising a surfactant system, a detergency builder system and optionally other conventional components, the detergency builder system comprising a zeolite P type having the oxide formula M_{2/n}O.Al₂O₃.(1.80-2.66)SiO₂.yH₂O, y being the water content and M being an n-valent alkali metal cation, charaterized in that the process is carried out at a temperature below 25°C, for at least a part of a washing cycle.

2. Process for washing fabrics according to claim 1 wherein fabrics are washed at a temperature of between 5°C and 20°C for at least a part of the washing cycle.

3. Process for removing calcium ions, by ion exchange, from an aqueous solution wherein an effective amount of an alkali metal aluminosilicate of the zeolite P type having the oxide formula M_{2/n}O.Al₂O₃.(1.80-2.66)SiO₂.yH₂O, y being the water content and M being an n-valent alkali metal cation, is used as ion exchanger, characterized in that said aqueous solution is at a temperature of between 5°C and 10°C.

## Patentansprüche

1. Verfahren zum Waschen von Geweben mit einer Waschmittelzusammensetzung, die ein oberflächenaktives System, ein Waschmittelbuildersystem und wahlweise andere übliche Bestandteile umfaßt, wobei das Waschmittelbuildersystem einen Zeolith Typ P mit der Oxidformel M_{2/n}O.Al₂O₃.(1,80-2,66) SiO₂.yH₂O (y ist der Wassergehalt und M ein n-valentes Alkalimetallkation) umfaßt, dadurch gekennzeichnet, daß das Verfahren über mindestens einen Teil eines Waschzyklus bei einer Temperatur von unter 25°C durchgeführt wird.

2. Verfahren zum Waschen von Geweben nach Anspruch 1, bei dem die Gewebe über mindestens einen Teil des Waschzyklus bei einer Temperatur von zwischen 5 und 20° gewaschen werden.

3. Verfahren zum Entfernen von Calciumionen durch Ionenaustausch aus einer wäßrigen Lösung, bei dem eine wirksame Menge eines Alkalimetallaluminosilikats des Typs Zeolith P mit der Oxidformel M_{2/n}O.Al₂O₃.(1,80-2,66)SiO₂.yH₂O (y ist der Wassergehalt und M ein n-valentes Alkalimetallkation) als Ionenaustauscher verwendet wird, dadurch gekennzeichnet, daß sich die wäßrige Lösung bei einer Temperatur von zwischen 5 und 10°C befindet.

## Revendications

1. Procédé pour laver des tissus avec une composition détergente comprenant un système tensio-actif, un système d'adjuvant de détergence et éventuellement d'autres composants classiques, le système d'adjuvant de détergence comprenant un type de zéolite P ayant la formule d'oxyde M_{2/n}O.Al₂O₃.(1,80 à 2,66)SiO₂.yH₂O, y étant la teneur en eau et M étant un cation n-valent de métal alcalin, caractérisé en ce que le procédé est effectué à une température au-dessous de 25°C, pendant au moins une partie d'un cycle de lavage.

2. Procédé pour laver des tissus selon la revendication 1, dans lequel les tissus sont lavés à une température comprise entre 5°C et 20°C pendant au moins une partie du cycle de lavage.

3. Procédé pour éliminer les ions calcium, par échange d'ions, à partir d'une solution aqueuse, dans lequel une quantité efficace d'un aluminosilicate de métal alcalin du type zéolite P ayant la formule d'oxyde M_{2/n}O.Al₂O₃.(1,80 à 2,66)SiO₂.yH₂O, y étant la teneur en eau et M étant un cation n-valent de métal alcalin, est utilisée en tant qu'échangeuse d'ions, caractérisé en ce que ladite solution aqueuse est à une température comprise entre 5°C et 10°C.
